(19) Europäisches Patentamt
European Patent Office
Office européen des brevets

(11) Veröffentlichungsnummer: **0 226 874**
**A2**

# (12) EUROPÄISCHE PATENTANMELDUNG

(21) Anmeldenummer: **86116590.0**

(22) Anmeldetag: **28.11.86**

(51) Int. Cl.[4]: **C 12 H 1/02**
A 23 L 2/30, A 23 L 2/36
C 22 B 3/00

(30) Priorität: **21.12.85 DE 3545578**

(43) Veröffentlichungstag der Anmeldung:
**01.07.87 Patentblatt 87/27**

(84) Benannte Vertragsstaaten:
**AT BE CH DE ES FR GB GR IT LI LU NL SE**

(71) Anmelder: **Erbslöh Geisenheim GmbH & Co.**
**Erbslöhstrasse 1**
**D-6222 Geisenheim(DE)**

(72) Erfinder: **Kern, Helmut, Dr. Chem.**
**Am Abtswald 8**
**D-6222 Geisenheim-Johannisberg(DE)**

(74) Vertreter: **Weber, Dieter, Dr. et al,**
**Dr. Dieter Weber und Klaus Seiffert Patentanwälte**
**Gustav-Freytag-Strasse 25 Postfach 6145**
**D-6200 Wiesbaden 1(DE)**

## (54) Mittel zur selektiven Entfernung von Schwermetallen aus Flüssigkeiten.

(57) Ein Mittel zur selektiven Entfernung von Schwermetallen aus Getränken, insbesondere aus Weinen, Fruchtsäften und Spirituosen, besteht aus einem Polymer mit Schwermetallionen bindenden Gruppen, das durch Oximierung eines freie Aldehydegruppen aufweisenden Polymers mit Hilfe von Hydroxylamin und anschließende Oxidation herstellbar ist.

EP 0 226 874 A2

# Mittel zur selektiven Entfernung von Schwermetallen aus Flüssigkeiten

Flüssigkeiten und insbesondere Getränke, wie Weine, Fruchtsäfte und Spirituosen, können Schwermetalle in unterschiedlichen Mengen enthalten. Aus toxikologischer und hygienischer Sicht können diese bedenklich sein oder in den Getränken Trübungen verursachen, so daß man seit langem daran arbeitet, die Schwermetallgehalte solcher Getränke, insbesondere von Wein, zu vermindern.

Die Ursachen für die Anreicherung von Schwermetallen sind unterschiedlich und können beispielsweise aus der Kupfersulfatschönung oder aus der Korrosion von mit dem Getränk in Berührung stehenden Metallteilen stammen.

Insbesondere von Bedeutung sind unter diesen Schwermetallen Eisen und Kupfer, die bei Überschreiten einer kritischen Konzentration (0,3 bis 0,5 mg/l beim Kupfer und 3 bis 7 mg/l beim Eisen) je nach dem Redoxpotential und der Zusammensetzung des Weines oder anderen Getränkes Anlaß für die Ausscheidung von Trübungen sein können.

Eine bekannte Methode zur Verminderung des Schwermetallgehaltes von Weinen ist die sogenannte Blauschönung mit Hilfe von Kaliumhexacyanoferrat, die mehr oder weniger selektiv Eisen und Kupfer aus dem Getränk entfernt.

Aus toxikologischer Sicht ist diese Art der Schönung problematisch, da bei Überschönung von dem sauren Getränk in kleinen Mengen Cyanwasserstoff gebildet wird und in dem Getränk verbleibt. Weitere Probleme dieser Schönungsart sind die der Trubaufbereitung, da der abzutrennende Niederschlag teilweise kolloidal gelöst bleibt und schlecht filtrierbar ist. Schließlich kann der abgetrennte Feststoff nicht einer üblichen Deponie zugeführt werden, sondern es muß eine Endlagerung als Sondermüll erfolgen. Dieses alles macht die

Blauschönung problematisch und unattraktiv.

Eine ähnliche Schönungsmethode ist die mit Fessler's Compound, die auf dem gleichen Prinzip beruht. Diese Fessler's Compound wird aus Eisen(II)-sulfat und einer überäquivalenten Menge Kaliumhexacyanoferrat hergestellt. Bei dieser Schönungsart treten die gleichen Probleme wie bei der Blauschönung auf. Außerdem ist diese Komplexverbindung bei der Lagerung instabil.

Eine Möglichkeit zur Ausfällung von dreiwertigem Eisen ist durch die Behandlung mit Ca-Phytat (Inosittetracalciumphosphat) gegeben. Diese Behandlung ist nur für Rotweine zulässig. Gemäß E. Vogt: Der Wein - Bereitung, Behandlung, Untersuchung - 5. Auflage, Verlag Eugen Ulmer, Stuttgart 1968 werden Kupfer und Zink sowie zweiwertiges Eisen nicht ausgefällt.

Nach H. Tanner: Calciumphytatschönung und Nachtrübung durch freiwerdendes Calcium, Schw. Ztschr. f. Obst- u. Weinbau, Seite 391, 1966 besteht die Gefahr von Nachtrübungen, da die Umsetzung mit Eisen nur sehr langsam (oft erst nach Monaten) erfolgt.

Die tschechoslowakische Patentschrift 163 307 beschreibt ein Verfahren zur Beseitigung von Metallkationen aus Wein mit Hilfe von Amidoximstärke. Diese Verbindung hat aber nur geringe Bindefähigkeit gegenüber Kupferionen und damit nur begrenzte Wirksamkeit.

Schließlich beschreibt die tschechoslowakische Patentschrift 147 431 eine Methode zum Klären und Stabilisieren von Wein mit Hilfe von Natriumpektat. Dieses aber ist nicht selektiv gegenüber Schwermetallen, sondern bindet auch andere Ionen, wie Calcium- und Magnesiumionen, was äußerst unerwünscht ist.

Die der Erfindung zugrundeliegende Aufgabe bestand nun darin, ein neues Mittel zur selektiven Entfernung von Schwermetallen, insbesondere von Eisen- und Kupferionen, aus Flüssigkeiten, besonders Getränken, insbesondere aus Weinen, Fruchtsäften und Spirituosen, zu bekommen, das die obigen Probleme bekannter Verfahren überwindet, gleichermaßen Eisen und Kupfer in möglichst vollständigem Umfang bindet, auch bei Überschönung keine toxikologisch bedenklichen Produkte ergibt und selektiv auf Schwermetallionen wirkt.

Das erfindungsgemäße Mittel, das aus einem Polymer mit Schwermetallionen bindenden Gruppen besteht, ist dadurch gekennzeichnet, daß das Polymer durch Oximierung eines freie Aldehydgruppen aufweisenden Polymers mit Hilfe von Hydroxylamin oder durch Polymerisation eines mit Hydroxylamin oximierten polymerisierbaren Aldehyds und anschließende Oxidation herstellbar ist. Die erstere Alternativmöglichkeit ist bevorzugt.

Bei beiden Alternativmöglichkeiten kann das Polymer ein Homopolymer oder Copolymer sein.

Beispiele von freie Aldehydgruppen aufweisenden Polymeren sind Stärkedialdehyd und Cellulosedialdehyd, bevorzugt Polyacrolein. Ein Beispiel eines polymerisierbaren Aldehyds ist Acrolein.

Wenn hier davon die Rede ist, daß dieses Mittel aus dem genannten Polymer besteht, so besagt dies selbstverständlich nicht, daß beim Zusatz des Mittels zu dem zu schönenden Getränk dieses Polymer nicht im Gemisch oder gleichzeitig mit anderen Stoffen zugegeben werden kann, wie beispielsweise mit Inertstoffen, wie Filterhilfsmitteln, oder mit anderen Schönungsmitteln. Der Erfindungsgedanke soll daher auch solche Mittel einschließen, in denen das genannte Polymer im Gemisch mit anderen Stoffen vorliegt.

Bei der Anwendung zur Schönung von Getränken wird das oximierte und anschließend oxidierte Polymer dem Getränk in

geeigneter Menge zugesetzt und nach angemessener Behandlungszeit, die ausreichen muß, die Schwermetallionen, insbesondere Eisen und Kupfer, zu binden, abgetrennt, wobei übliche kellertechnische Verfahren angewendet werden. Die Abtrennung kann durch Filtrieren, Zentrifugieren oder dergleichen erfolgen.

Das erfindungsgemäß eingesetzte Polymer ist in den in Betracht zu ziehenden Getränken unlöslich. Dies ist dadurch zu beweisen, daß sich beim Eindampfen von mit dem Mittel behandelter Modellösung, die selbst aus rückstandsfrei verdampfbaren Bestandteilen zusammengesetzt ist (Ethanol/Wasser/HCl auf pH 3) keinerlei organische Rückstände finden. Das erfindungsgemäße Mittel hat auch keinerlei geschmackliche Einwirkungen auf das Getränk und ist außerdem ohne Veränderungen lange Zeit lagerfähig.

Das für die Oximierung und anschließende Oxidation zu verwendende Polyacrolein kann durch Redoxpolymerisation hergestellt werden. Auch Disacryl bildet mit Hydroxylamin ein Polyacroleinoxim und ist daher alternativ einsetzbar.

Destilliertes und damit entstabilisiertes Acrolein polymerisiert selbständig im Verlauf mehrerer Wochen zu Disacryl oder Polyacrolein. Die Polyacroleine haben aber nicht notwendigerweise den gleichen Aufbau. Besonders geeignet ist solches Polyacrolein, das unter Katalyse mit Fe(II) und Peroxydisulfat polymerisiert wurde.

Das Polyacrolein wird zur Oximierung mit Hydroxylamin oder einem Salz desselben umgesetzt, worauf das gebildete Polyacroleinoxim einer Oxidation unterzogen wird.

Alternativ wird zunächst Acrolein mit Hydroxylamin oximiert, worauf das Acroleinoxim, wie Acrolein selbst polymerisiert wird. Das so erhaltene oximierte Polyacrolein wird dann oxidiert.

Obwohl verschiedene Oxidationsmittel geeignet sind, wie beispielsweise auch Jod, sind nicht alle oxidierten Produkte gleichermaßen wirksam. Bevorzugt verwendet man daher ein Polymer, das durch Oxidation des Polyacroleinoxims mit Wasserstoffperoxid in alkalischem Medium hergestellt wurde. Zweckmäßig arbeitet man bei der Oxidation bei relativ niedrigen Temperaturen von höchsten 70 °C.

Die Struktur des erfindungsgemäß eingesetzten Polymers ist nicht abschließend geklärt, doch ist es denkbar, daß die Aldehydgruppen des Polyacroleins nach Oximierung und Oxidation in Gruppen der Struktur

$$-\overset{O}{\overset{\|}{C}}-\underset{OH}{\underset{|}{N}}-\overset{O}{\overset{\|}{C}}-$$

umgewandelt werden, die willkürlich über die Polymermoleküle verteilt angeordnet sind oder zwei Polymermoleküle miteinander vernetzen.

Das erfindungsgemäße Mittel ist, wie erwähnt, in Wein und anderen hier in Betracht zu ziehenden Flüssigkeiten, wie Getränken, nicht löslich, so daß keine Überdosierung möglich ist und keine geschmackliche oder anderweitige Beeinträchtigung des Getränkes erfolgt. Nach der Bindung der Schwermetallionen kann das Polymer leicht abgetrennt werden, wie durch Filtration, und kann normal deponiert werden, so daß die Endlagerung

als Sondermüll entfällt.

Die Herstellung des Polymers kann beispielsweise folgendermaßen erfolgen:

Handelsübliches mit 0,2 % Hydrochinon stabilisiertes Acrolein wird destilliert und sodann unter Zusatz von Diammoniumeisen(II)-sulfat und Kaliumperoxydisulfat unter Erwärmen polymerisiert. Das erhaltene Polyacrolein wird abgesaugt und mit 0,1 M HCl und Wasser von Eisen(II)- und $SO_4$-Ionen freigewaschen.

Als nächstes erfolgt die Oximierung und anschließende Oxidation, was beides im selben Reaktionsgefäß erfolgen kann. Das Polyacrolein wird in Wasser suspendiert, worauf Hydroxylammoniumchlorid unter Oximierung zugegeben wird. Anschließend wird mit Natronlauge alkalisch gemacht und Wasserstoffperoxid zugegeben, wobei nitrose Gase entstehen. Das dabei gebildete oxidierte Polyacroleinoxim wird abgesaugt, mit Wasser gewaschen und von restlichen Verunreinigungen gereinigt. Dies kann durch Behandlung mit Weinsäure oder Jodlösung erfolgen, worauf mit Wasser (bei Verwendung von Jodlösung mit $Na_2S_2O_3$-Lösung) und mit Methanol gewaschen und sodann bei 70 °C getrocknet wird.

Die folgenden Beispiele dienen der weiteren Erläuterung der Erfindung.

Beispiel 1

Herstellung des oxidierten Polyacroleinoxims

a) Polyacrolein

Acrolein wurde unmittelbar vor seiner Verwendung destilliert (Kp. = 56 °C). In die Vorlage der Destillationsapparatur wurden einige Kupferspäne gegeben, um eine spontane Polymerisation zu vermeiden.

13,5 g Kaliumperoxydisulfat ($K_2S_2O_8$) wurden in 400 ml destilliertem Wasser gelöst. Zusammen mit 97 ml frisch destilliertem Acrolein wurde diese Lösung in einen 1-l-Dreihalskolben gegeben.

Innerhalb einer halben Stunde wurden 500 ml einer 0,1 M Diammoniumeisen(II)-sulfatlösung $(NH_4)_2Fe(SO_4)_2 \cdot 6H_2O$, MG 381,4, zugetropft. Die Temperatur ließ man 30 °C nicht übersteigen. Beim Ansetzen der Eisensalzlösung eventuell ausgefallenes Eisenhydroxid wurde vorher abfiltriert.

Nach Beendigung der Eisensalzzugabe wurde noch eine halbe Stunde weiter gerührt, dann wurde abgenutscht und mit reichtlich destilliertem Wasser, das mit verdünnter Salzsäure etwas angesäuert worden war, gewaschen (ca. 2 l Waschlösung). Man wusch so lange, bis die Waschlösung kein Eisen und kein Sulfat mehr enthielt.

b) Polyacroleinoxim

ca. 15 g Polyacrolein wurden im Becherglas in Waser suspendiert. Unter Rühren wurden 30 g Hydroxylaminhydrochlorid zugegeben. Nach ca. 1 h Reaktionszeit zeigte sich eine deutliche Gelbfärbung. Danach wurde durch Zugabe von ca. 20 %iger NaOH auf pH 11 bis 11,5 eingestellt.

c) Oxidiertes Polyacroleinoxim

Zu der unter b) erhaltenen Suspension wurde 30 %iges Perhydrol in gleichem Molverhältnis wie eingesetztes Acrolein sehr langsam zugetropft. Die Temperatur sollte dabei 40 °C nicht überschreiten. Die Reaktion ist nach maximal 15 h abgeschlossen.

Mit 10 %iger HCl wurde unter langsamem Zutropfen auf ca. pH 3 eingestellt. Nach ca. 30 min wurde das Polymer abgenutscht. Zur Entfernung wasserlöslicher Anteile wurde gründlich mit Wasser und Jodlösung bzw. Weinsäurelösung

gewaschen. Es wurde mit Methanol nachgewaschen und bei maximal 60 °C getrocknet.

Beispiel 2

Selektive Entfernung von Kupfer und Eisen aus Wein

Nach dem in Beispiel 1 beschriebenen Verfahren wurden verschiedene oxidierte Polyacroleinoxime unter Verwendung unterschiedlicher Molverhältnisse und Oxidationstemperaturen hergestellt. Die Molverhältnisse, Oxidationstemperaturen und Ausbeuten der erfindungsgemäß hergestellten und nachfolgend untersuchten Polymere finden sich in der nachfolgenden Tabelle I.

Tabelle I

| Mittel Nr. (nach der Erfindung) | Molverhältnis Acrolein : $NONH_2HCl$ : $H_2O_2$ | Temperatur bei Oxidation | Ausbeute (%) |
|---|---|---|---|
| 1 | 1 : 1 : 1,1 | 65 °C | 48 |
| 2 | 1 : 1 : 0,75 | 40 °C | 53 |
| 3 | 1 : 1 : 0,75 | 65 °C | 55 |
| 4 | 1 : 1 : 0,5 | 30 °C | 47 |
| 5 | 1 : 1 : 0,75 | 40 °C | 45 |

In den nachfolgenden Versuchen wurden zu Vergleichszwecken folgende Ionenaustauscherharze eingesetzt:

a) Chelite N (Serva): Die reaktionsfähigen Austauschergruppen sind Amidoximgruppen die äußerst starke Bindungen zu Schwermetallen eingehen.

b) Chelite S (Serva): Die reaktionsfähigen Austauschgruppen sind Sulfydrylgruppen (-S-H), die besondere Affinität zu Quecksilber besitzen, aber auch mit anderen Schwermetallen reagieren.

c) Ein Austauscherharz, bestehend aus inem Styrolgerüst mit Sulfydrylgruppen.

d) Phosphorylierte Cellulose.

Ein Wein mit den in den Tabellen IIa und IIb angegebenen Gehalten an Eisen, Kupfer und Natrium und mit dem ebenfalls angegebenen pH-Wert wurde mit 1 g/l bzw. 2 g/l der verschiedenen Mittel versetzt. Über Nacht wurde gerührt und dann mit einem Membranfilter abgesaugt. Die Restgehalte an Eisen, Kupfer und Natrium wurden bestimmt. Die Ergebnisse finden sich in den nachfolgenden Tabellen IIa und IIb.

Tabelle IIa

| Mittel Nr. (Erfindung) | ppm Fe | ppm Cu | ppm Na | pH |
|---|---|---|---|---|
| 0-Probe | 9,6 | 4,8 | 16,4 | 3,5 |
| 1 (1 g/l) | 7,6 | 0,7 | 14,5 | 3,5 |
| 1 (2 g/l) | 4,4 | 0,3 | 14,0 | 3,5 |
| 2 (1 g/l) | 1,3 | 0,9 | 14,0 | 3,5 |
| 2 (2 g/l) | <0,1 | 0,3 | 14,2 | 3,5 |
| 3 (1 g/l) | 2,7 | 1,4 | 14,7 | 3,5 |
| 3 (2 g/l) | 1,0 | 0,6 | 14,2 | 3,5 |
| 4 (1 g/l) | 1,6 | 1,3 | 13,5 | 3,5 |
| 4 (2 g/l) | 0,2 | 0,5 | 13,8 | 3,5 |
| 5 (1 g/l) | 1,5 | 0,9 | 13,6 | 3,5 |
| 5 (2 g/l) | 0,1 | 0,3 | 13,6 | 3,5 |
| Vergleich | | | | |
| Chelite S (b) (1 g/l) | 9,6 | 3,8 | 15,4 | 3,5 |
| Chelite S (b) (2 g/l) | 9,6 | 3,0 | 17,1 | 3,5 |
| SH-Styrol (c) (1 g/l) | 8,4 | 3,1 | 26,7 | 3,5 |
| SH-Styrol (c) (2 g/l) | 7,4 | 2,0 | 41,1 | 3,5 |

Tabelle IIb

| | ppm Fe | ppm Cu | ppm Na | pH |
|---|---|---|---|---|
| 0-Probe | 9,4 | 4,0 | 12,1 | 3,4 |
| Chelite N* (a) (0,3 - 0,8 mm) (1 g/l) | 5,5 | 3,6 | 13,8 | 3,4 |
| Chelite N* (0,3 - 0,8 mm) (2 g/l) | 3,0 | 3,1 | 14,0 | 3,4 |
| Chelite N (0,3 - 0,8 mm) (2 g/l) | 2,6 | 3,0 | 25,4 | 3,4 |
| Chelite N* (0,005 - 0,1 mm (1 g/l) | 0,5 | 2,8 | 14,3 | 3,4 |
| Chelite N* (0,05 - 0,1 mm) (2 g/l) | 0,2 | 2,0 | 16,3 | 3,4 |
| Chelite N (0,05 - 0,1 mm) (2 g/l) | 0,2 | 2,0 | 45,0 | 3,4 |
| phos. Cellulose (d) (2 g/l) | 2,4 | 4,0 | 14,8 | 3,4 |

*) Zur Vermeidung einer pH-Veränderung wurde das Harz mit 2 %iger $K_2CO_3$-Lösung vorbehandelt.

Die Mittel 2 und 5 erbrachten die besten Ergebnisse, was zeigt, daß die Oxidation bei niedrigen Temperaturen am günstigsten ist.

Die Vergleichspolymere ergaben erheblich schlechtere Ergebnisse. Chelite N führte zu einer nur sehr ungenügenden Entfernung von Kupfer. Teilweise führten die Vergleichspräparate zu einer Anreicherung von Natrium, was äußerst unerwünscht ist.

Die mit Chelite N behandelten Weine zeigten außerdem eine deutliche Aufhellung und geschmackliche Beeinträchtigung. Die erfindungsgemäßen Mittel führten zu keinerlei geschmacklicher Verschlechterung des Weines.

Die obigen Vergleichsversuche zeigen die überlegene Wirksamkeit der erfindungsgemäßen Mittel bei der selektiven Entfernung von Kupfer und Eisen aus Wein und anderen Getränken.

# P a t e n t a n s p r ü c h e

1. Mittel zur selektiven Entfernung von Schwermetallen aus Flüssigkeiten, insbesondere aus Weinen, Fruchtsäften und Sprituosen, bestehend aus einem Polymer mit Schwermetallionen bindenden Gruppen, **dadurch gekennzeichnet**, daß das Polymer durch Oximierung eines freie Aldehydgruppen aufweisenden Polymers mit Hilfe von Hydroxlamin oder durch Polymerisation eines mit Hydroxylamin oximierten polymerisierbaren Aldehyds und jeweils anschließende Oxidation herstellbar ist.

2. Mittel nach Anspruch 1, **dadurch gekennzeichnet**, daß das Polymer durch Oximierung und anschließende Oxidation von Polyacrolein herstellbar ist.

3. Mittel nach Anspruch 1, **dadurch gekennzeichnet**, daß es durch Oximierung von Acrolein, anschließendes Polymerisieren des Acroleinoxims und nachfolgende Oxidation des erhaltenen Polymers herstellbar ist.

4. Mittel nach einem der Ansprüche 1 bis 3, **dadurch gekennzeichnet**, daß es ein Polymer ist, das durch Oxidation des Oxims mit Wasserstoffperoxid in alkalischem Medium herstellbar ist.

5. Mittel nach Anspruch 4, **dadurch gekennzeichnet**, daß das Polymer durch Oxidation des Oxims bei einer Temperatur von höchstens 70 °C, vorzugsweise höchstens 50 °C, besonders höchstens 40 °C herstellbar ist.

6. Mittel nach einem der Ansprüche 1 bis 5, **dadurch gekennzeichnet**, daß es ein Polymer ist, das unter Verwendung eines durch Fe(II) und Peroxodisulfat katalysierte Polymerisation erhaltenen Polyacroleins herstellbar ist.